# EUROPÄISCHE PATENTSCHRIFT

(11) **EP 2 191 263 B1**
(45) Veröffentlichungstag und Bekanntmachung des Hinweises auf die Patenterteilung: **06.06.2012**
(21) Anmeldenummer: 08785606.8
(22) Anmeldetag: 18.08.2008
(51) Int. Cl.: G01N 30/68, G01N 27/62

(54) **FLAMMENIONISATIONSDETEKTOR**
FLAME IONIZATION DETECTOR
DÉTECTEUR À IONISATION DE FLAMME

(30) Priorität: 13.09.2007 EP 07018014
(43) Veröffentlichungstag der Anmeldung: 02.06.2010
(73) Patentinhaber: Bayer Technology Services GmbH, 51368 Leverkusen (DE)
(72) Erfinder: MÜLLER, Jörg, 21073 Hamburg (DE); KUIPERS, Winfred, 22765 Hamburg (DE)
(86) Internationale Anmeldenummer: PCT/EP2008/006781
(87) Internationale Veröffentlichungsnummer: WO 2009/036854

(56) Entgegenhaltungen:
- US-B1- 6 193 501
- ZIMMERMANN S ET AL: "Micro flame ionization detector and micro flame spectrometer" SENSORS AND ACTUATORS B, ELSEVIER SEQUOIA S.A., LAUSANNE, CH, Bd. 63, Nr. 3, Mai 2000 (2000-05), Seiten 159-166, XP004198335 ISSN: 0925-4005 in der Anmeldung erwähnt
- R. MANGINELL ET AL.: "Micro Flame-Based Detector Suite for Universal Gas Sensing" SANDIA REPORT, Nr. SAND2005-6236, 2005, Seiten 1-36, XP002471362 SANDIA NATIONAL LABORATORIES,ALBUQUERQUE,NEW MEXICO, US

## Beschreibung

Die Erfindung betrifft einen Flammenionisationsdetektor (FID), der eine Zuführung und eine Zündeinrichtung für das Brenngas, eine Zuführung für das Probengas, eine Brennkammer, in der das Probengas durch die Flamme ionisiert wird, und Elektroden aufweist, an die zur Erzeugung und Messung des Ionenstroms eine Spannung angelegt wird.

Flammenionisationsdetektoren dienen dazu, flüchtige organische Verbindungen in gasförmigen Proben festzustellen und zu messen. Die Messung beruht auf der chemischen Ionisation von organischen Substanzen, die in einer Knallgasflamme pyrolysiert werden. Es findet dabei eine Ionisationsreaktion der in der Substanz enthaltenen Kohlenstoffatome statt:

CH + O → CHO⁺ + e⁻

Legt man an ein am Rand der Flamme angeordnetes Elektrodenpaar eine Spannung an, so fließt ein Ionenstrom, der gemessen werden kann und zum Nachweis der organischen Verbindungen dienen kann. Durchläuft das Gas zunächst einen Gaschromatographen, zum Beispiel einen Kapillargaschromatographen, so treten die verschiedenen chemischen Verbindungen des Probengases, sortiert nach Molekulargewicht, nacheinander in den Flammenionisationsdetektor ein, so dass die Konzentration der verschiedenen Komponenten festgestellt werden kann.

Ein Problem bei Flammenionisationsdetektoren besteht darin, dass Knallgas, eine hochexplosive Mischung von Sauerstoff und Wasserstoff zugeführt werden muss. Man ist daher bestrebt, die Flammenionisationsdetektoren möglichst klein zu machen, damit man nur geringe Mengen von Knallgas benötigt und die Explosionsgefahr dadurch vermindert wird. Außerdem sind solche kleinen Flammenionisationsdetektoren natürlich von Vorteil, da sie leichter transportierbar sind und weniger Platz benötigen. Weiter ist es wegen des geringeren Verbrauchs an Knallgas möglich, dieses nicht in gespeicherter Form zu verwenden, sondern vor Ort durch Elektrolyse herzustellen, was die Explosionsgefahr weiter verringert. Ein solcher Flammenionisationsdetektor, der von diesem Vorteil Gebrauch macht, besteht aus Komponenten, die nach den Verfahren der Mikrosystemtechnik hergestellt sind (S. Zimmermann et al., "Micro flame ionization detector and microflame spectrometer", Sensors and Actuators B63 (2000), S. 159-166; S. Zimmermann et al., "Miniaturized flame ionization detector for gas chromatography", Sensors and Actuators B83 (2002), S. 285-289). Die Knallgasflamme brennt dabei im offenen Raum und wird nur von einem metallisierten Glasrohr, das zusammen mit dem Silizium Substrat ein Elektrodenpaar bildet, umgeben. Da die Flamme im offenen Raum brennt, kann das Ergebnis durch Turbulenzen und Verunreinigungen beeinflusst werden. Zudem wird Wärme abgestrahlt, so dass eine verhältnismäßig große Menge von Brenngas erforderlich ist. Ein zusätzlicher Nachteil besteht darin, dass das Glasrohr aufgeklebt werden muss, der Detektor also ebenfalls nicht vollständig mit den Verfahren der Mikrosystemtechnik hergestellt werden kann, so dass seine Konstruktion aufwendig und teuer ist und wenig für Massenherstellung geeignet ist.

Auch weitere vorbekannte Flammenionisationsdetektoren kleiner Bauart weisen den Nachteil auf, dass sie nicht oder nicht vollständig mit den Verfahren der Mikrosystemtechnik hergestellt werden können (US 5 576 626; WO 2006/000099 A1).

Die Aufgabe der Erfindung besteht in der Schaffung eines Flammenionisationsdetektors, der geringe Größe hat und vollständig mit den Verfahren der Mikrosystemtechnik hergestellt werden kann.

Erfindungsgemäß ist der Flammenionisationsdetektor dadurch gekennzeichnet, dass er als integriertes planares System aus mindestens drei parallelen miteinander verbundenen plättchenförmigen Substraten aufgebaut ist, die mit Verfahren der Mikrosystemtechnik bearbeitet sind, wobei ein mittleres Substrat Düsen für die Gase und die Zündeinrichtung und eine Ausnehmung aufweist, die einen Teil der Brennkammer bildet, die durch Ausnehmungen in den benachbarten Substraten vervollständigt wird und durch diese Substrate im Wesentlichen zusammen mit dem Düsenbereich verschlossen ist, und die benachbarten Substrate Zuführkanäle für die Gase aufweisen.

Der erfindungsgemäße Flammenionisationsdetektor besteht also im Wesentlichen aus drei plättchenförmigen Substraten, wobei allerdings weitere Substrate vorgesehen sein könnten. Diese Substrate sind ausschließlich mit den Mitteln der Mikrosystemtechnik durch Fotoätzen und dergleichen hergestellt. Das mittlere Substrat weist dabei Düsen für die Gase und die Zündeinrichtung und eine Ausnehmung auf, die einen Teil der Brennkammer bildet. Die Brennkammer wird durch Ausnehmungen in den benachbarten Substraten vervollständigt. Während das mittlere Substrat im Bereich der Brennkammer vollständig durchbrochen sein kann, weisen die benachbarten Substrate Mulden auf, die nach dem Zusammenbau die Brennkammer abschließen, so dass die Brennkammer im Wesentlichen geschlossen ist. "Im Wesentlichen geschlossen" bedeutet dabei, dass die Brennkammer nur eine kleine Öffnung aufweisen muss, durch die die Gase nach außen entweichen können. Man könnte sogar daran denken, die Brennkammer vollständig zu schließen, wenn man eine Kühleinrichtung vorsieht, an der das ausschließliche Verbrennungsprodukt, nämlich Wasser, kondensiert. Man müsste dann nur für geeignete Maßnahmen sorgen, dass das Wasser abgeführt wird.

Die beiden benachbarten oder äußeren Substrate umschließen aber nicht nur die Brennkammer, sondern auch den Düsenbereich. Während die Düsen für das Brenngas und das Probengas im mittleren Substrat vorgesehen sind, erfolgt die Zuleitung dieser Gase durch Zuführkanäle in den benachbarten oder äußeren Substraten.

Bei einer vorteilhaften Ausführungsform ist das mittlere Substrat leitfähig und die benachbarten Substrate im Wesentlichen nicht leitend. "Im Wesentlichen nicht leitend" bedeutet dabei, dass die Leitfähigkeit auch bei erhöhter Temperatur gering ist, aber doch so groß, dass anodisches Bonden der Substrate möglich ist, was ja eine gewisse Leitfähigkeit der Komponenten voraussetzt. Diese Leitfähigkeit sollte aber nicht zu hoch sein, da dadurch nicht nur Ionenströme, die gemessen werden sollen, sondern auch Leckströme durch das Substrat stattfinden, die das Messergebnis verfälschen können.

Vorteilhafterweise bestehen das mittlere Substrat aus Silizium und die benachbarten Substrate aus Glas, wobei als Glas insbesondere Borosilikatglas sich als besonders vorteilhaft erwiesen hat.

Bei einer vorteilhaften Ausführungsform ist je eine Elektrode im Bereich der Brennkammer in den benachbarten Substraten angeordnet. Es befinden sich also Elektroden auf beiden Seiten der Brennkammer. Der Nachteil besteht dabei, dass dann, wenn eine Spannung an die beiden Elektroden angelegt wird, nicht nur der Ionenstrom gemessen wird, sondern auch der Strom, der von einer Elektrode zur anderen aufgrund der von Null verschiedenen Leitfähigkeit der äußeren Substrate und von Wasser fließt, das sich abgesetzt hat.

Dieser Nachteil kann durch eine erfindungsgemäße Schutzelektrode vermieden werden, durch die diese Ströme aufgenommen werden. Bei einer vorteilhaften Ausführungsform wird dabei zum einen eine Elektrode durch das mittlere Substrat gebildet und zum anderen befindet die Schutzelektrode sich neben der zweiten Elektrode auf einem der beiden benachbarten Substrate, zwischen den beiden Elektroden. Ströme, die vom einen benachbarten Substrat zum anderen benachbarten Substrat fließen, werden in diesem Fall von der Schutzelektrode aufgenommen und nicht mitgemessen.

Aufgrund der hohen Temperatur der Flamme (bis 2700°C) wird der Flammenionisationsdetektor stark erwärmt. Um Spannungsrisse zu vermeiden, haben zweckmäßigerweise alle Teile abgerundete Konturen.

Wenn die Elektroden an den benachbarten Substraten verspiegelt sind, wird Wärme von der Flamme in die Brennkammer zurückreflektiert. Es wird einerseits weniger Brenngas benötigt. Andererseits wird der Detektor weniger erwärmt.

Bei einer vorteilhaften Ausführungsform sind die Düsen für die Gase als vergrabene Struktur ausgebildet und durch mindestens ein weiteres Substrat abgedeckt. Auf diese Weise kann man symmetrische Anordnung der Düsen erreichen.

Vorteilhafterweise weist das mittlere Substrat eine Elektrodenspitze unmittelbar hinter den Düsen auf. Über diese Elektrodenspitze und eine Elektrode auf einer der beiden benachbarten Substrate ist ein Hochspannungspuls zum Zünden der Flamme anlegbar. Ein solcher Hochspannungsimpuls könnte zum Beispiel durch einen Piezo-Kristall erzeugt werden. Der Flammenionisationsdetektor kann auch zur Erzeugung elektrischer Energie verwendet werden, indem er mit zwei Magneten hoher Induktion versehen ist und dadurch einen magnetohydrodynamischen Generator bildet.

Die Erfindung wird im Folgenden anhand von vorteilhaften Ausführungsformen unter Bezugnahme auf die beigefügten Zeichnungen beschrieben. Es zeigen:
- Fig. 1: in Explosionsansicht eine Ausführungsform des erfindungsgemäßen Flammenionisationsdetektors;
- Fig. 2: eine Schnittansicht entlang der gewinkelten Linie A-A'-A" von Fig. 1;
- Fig. 3: im Schnitt in entsprechender Darstellung wie Fig. 2 eine Messanordnung;
- Fig. 4: im Schnitt in entsprechender Darstellung wie Fig. 2 eine zweite besonders vorteilhafte Ausführungsform der Messanordnung;
- Fig. 5: die Abhängigkeit des Ionenstroms von der angelegten Spannung bei einer vorteilhaften Ausführungsform; und
- Fig. 6: die Abhängigkeit des Ionenstroms von der Strömungsgeschwindigkeit des Probengases.

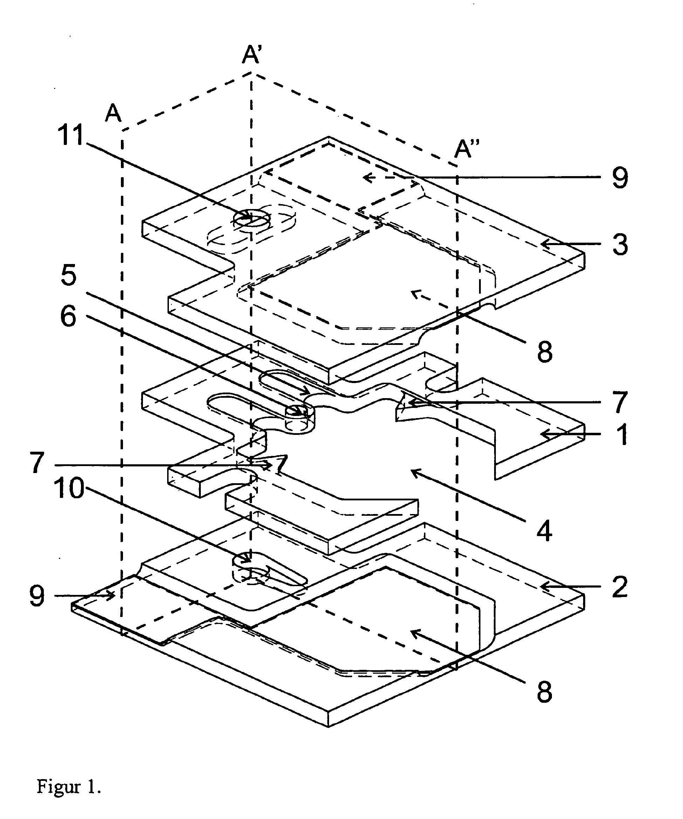

In Fig. 1 ist eine Explosionsansicht einer erfindungsgemäßen Ausführungsform des Flammenionisationsdetektors gezeigt. Er weist drei Substrate auf, ein mittleres Substrat 1 aus Silizium und ein unteres Substrat 2 und ein oberes Substrat 3 aus Pyrexglas. In das mittlere Siliziumsubstrat 1 sind mit bekannten Methoden der Mikrosystemtechnik ein Teil der Brennkammer 4, die Probengasdüse 5 und die Brenngasdüse 6 herausgearbeitet. Spitzenförmige Vorsprünge 7, die in der Nähe der Düsen 5, 6 in die Brennkammer 4 hineinragen, können mit einem Hochspannungspuls zum Zünden beaufschlagt werden.

Das untere Substrat 2 und das obere Substrat 3 sind im Bereich der Brennkammer 4 mit muldenförmigen Ausnehmungen versehen, die mit einer spiegelnden Metallisierung 8 versehen sind. Die Metallisierung 8 ist dabei mit Bondinseln 9 verbunden, über die elektrischer Anschluss stattfinden kann. Das in den Figuren untere Substrat 2 weist noch einen Brenngaseinlass 10 auf, während das obere Substrat 3 einen Probengaseinlass 11 aufweist. Diese Einlässe sind, nachdem die drei Substrate durch anodisches Bonden verbunden sind, in Verbindung mit den Düsen 5, 6.

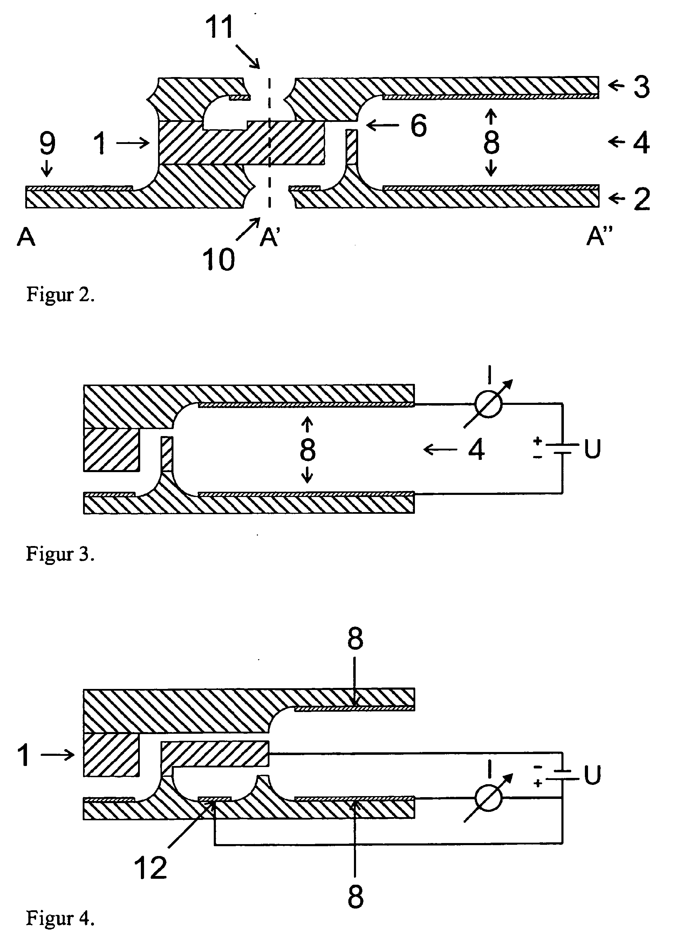

In Fig. 2 ist eine Schnittansicht entlang der gewinkelten Linie A-A' -A" von Fig. 1 gezeigt. Das Brenngas und das Probengas treten durch entsprechende Kanäle in die Brennkammer 4 ein, die mit den Metallisierungen 8 versehen ist. Diese Metallisierungen können als die Elektroden verwendet werden, an die eine Spannung angelegt wird und der Strom gemessen wird, wie dies in Fig. 3 schematisch dargestellt ist. Ein Nachteil ist dabei, dass durch die Spannungsquelle U nicht nur ein Ionenstrom zwischen den beiden Elektroden 8 erzeugt wird, der bei I gemessen wird, sondern einerseits ein Strom aufgrund der begrenzten Leitfähigkeit der Substrate 1, 2 und 3 als auch ein Strom, der durch niedergeschlagene Feuchtigkeit bewirkt wird.

Dieser Nachteil wird bei der Ausführungsform der Fig. 4 durch eine Schutzelektrode 12 vermieden. Nur eine der Metallisierungen 8, nämlich in Fig. 4 die untere, ist elektrisch verbunden. Die andere Metallisierung hat lediglich den Zweck, Wärme in den Brennraum 4 zurückzureflektieren, so dass weniger Brenngas benötigt wird. Als zweite Elektrode für die Messung dient das Substrat 1. Die Schutzelektrode 12 ist über die Spannungsquelle U mit dem Substrat 1 verbunden. Ströme, die außerhalb der Brennkammer (bevor die Gase die Brennkammer erreichen) fließen, nämlich wegen der Leitfähigkeit der Substrate und niedergeschlagenen Wassers, zwar aufgrund der Spannungsquelle U, werden aber durch den

Strommesser I nicht mitgemessen. Gemessen werden vielmehr nur die Ströme zwischen Substrat 1 und unterer Elektrode 8, das heißt nur die Ströme, die tatsächlich von der Flammenionisation herrühren.

Der erfindungsgemäße Flammenionisationsdetektor kann sehr klein gemacht werden. Typischerweise nimmt er eine Grundfläche von 10x10 mm ein. Die Substrate brauchen nur eine Dicke von wenigen 100 µm aufzuweisen. Die Düsenöffnungen für das Brenngas und das Messgas können auf wenige 10 bis 100 µm² verringert werden, um damit den Brenngasverbrauch zu minimieren beziehungsweise die Gasvermischung zu optimieren. Obwohl in den Figuren die Brennkammer 4 nach rechts hin offen gezeigt ist, wird sie normalerweise bis auf eine kleine Öffnung verschlossen, um Turbulenzen aufgrund äußerer Luftströmungen und Verunreinigungen zu vermeiden. Die Rückdiffusion aus der Umgebung kann zum Beispiel dadurch verhindert werden, dass der Brennraum 4 nur durch einen schmalen Spalt mit der Umgebung in Verbindung steht, etwa zwischen dem mittleren und einem oder beiden benachbarten Decksubstrate oder durch einen kleinen Spalt im mittleren Substrat. Die Brennkammer könnte vollständig mit Wasser verschlossen werden in dem das Verbrennungsprodukt, nämlich Wasser, an einer zusätzlichen Kühleinrichtung kondensiert.

Die Herstellung des Flammenionisationsdetektors kann wie erwähnt mit den üblichen Techniken der Mikrosystemtechnik und Fotolithographie erfolgen.

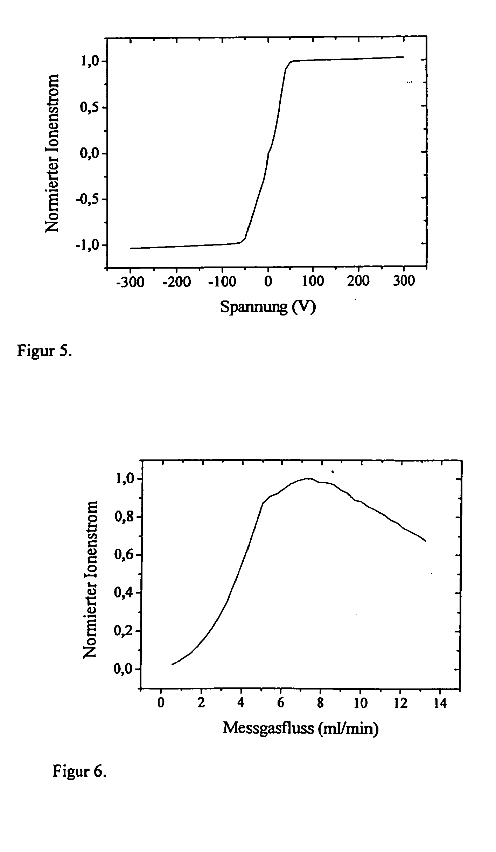

Ein typischer erfindungsgemäßer Flammenionisationsdetektor arbeitet mit verhältnismäßig niedrigen Spannungen, wie dies in Fig. 5 gezeigt ist. Bereits bei einer Spannung von plus oder minus 50 V tritt Sättigung ein. Das Messergebnis ist dann bei höheren Spannungswerten konstant. Die entsprechende Kurve wurde bei einem Fluss des Probengases von 7 ml/min aufgezeichnet. Die Abhängigkeit des Ionenstroms von der Strömungsgeschwindigkeit des Probengases bei einer Spannung von 100 V ist in Fig. 6 gezeigt.

## Patentansprüche

1. Flammenionisationsdetektor, umfassend
eine Zuführung und eine Zündeinrichtung (7) für das Brenngas,
eine Zuführung für das Probengas,
eine Brennkammer (4), in der das Probengas durch die Flamme ionisiert wird, und
Elektroden (8, 1), an die zur Erzeugung und Messung des Ionenstroms eine Spannung angelegt wird,
wobei der Flammenionisationsdetektor als integriertes planares System aus mindestens drei parallelen miteinander verbundenen plättchenförmigen Substraten (1, 2, 3) aufgebaut ist, die mit Verfahren der Mikrosystemtechnik bearbeitet sind,
**dadurch gekennzeichnet, dass** ein mittleres Substrat (1) Düsen (5, 6) für die Gase und die Zündeinrichtung (7) und eine Ausnehmung aufweist, die einen Teil der Brennkammer (4) bildet, die durch Ausnehmungen in den benachbarten Substraten (2, 3) vervollständigt wird und durch diese Substrate (2, 3) im Wesentlichen zusammen mit dem Düsenbereich verschlossen ist, und die benachbarten Substrate (2,3) Zuführkanäle (10, 11) für die Gase aufweisen.

2. Flammenionisationsdetektor nach Anspruch 1, **dadurch gekennzeichnet, dass** das mittlere Substrat (1) elektrisch leitfähig ist und die benachbarten Substrate (2, 3) im Wesentlichen nichtleitend sind.

3. Flammenionisationsdetektor nach Anspruch 1 oder 2, **dadurch gekennzeichnet, dass** das mittlere Substrat (1) aus Silizium und die benachbarten Substrate (2, 3) aus Glas, insbesondere Borosilikatglas bestehen.

4. Flammenionisationsdetektor nach einem der Ansprüche 1 bis 3, **dadurch gekennzeichnet, dass** je eine Elektrode (8) im Bereich der Brennkammer (4) in den benachbarten Substraten (2, 3) angeordnet ist.

5. Flammenionisationsdetektor nach einem der Ansprüche 2 und 3, **dadurch gekennzeichnet, dass** eine Elektrode durch das mittlere Substrat (1) gebildet ist.

6. Flammenionisationsdetektor nach Anspruch 5, **dadurch gekennzeichnet, dass** er eine Schutzelektrode (12) aufweist.

7. Flammenionisationsdetektor nach einem der Ansprüche 1 bis 6, **dadurch gekennzeichnet, dass** alle Substrate (1, 2, 3) abgerundete Konturen aufweisen.

8. Flammenionisationsdetektor nach einem der Ansprüche 1 bis 7, **dadurch gekennzeichnet, dass** die Substrate (1, 2, 3) durch anodisches Bonden verbunden sind.

9. Flammenionisationsdetektor nach einem der Ansprüche 4 bis 8, **dadurch gekennzeichnet, dass** die Elektroden (8) an den benachbarten Substraten (1, 2) verspiegelt sind.

10. Flammenionisationsdetektor nach einem der Ansprüche 1 bis 9, **dadurch gekennzeichnet, dass** die Düsen (5, 6) für die Gase als vergrabene Struktur ausgebildet und durch mindestens ein weiteres Substrat abgedeckt sind.

11. Flammenionisationsdetektor nach einem der Ansprüche 1 bis 10, **dadurch gekennzeichnet, dass** das mittlere Substrat (1) mindestens eine Elektrodenspitze (7) unmittelbar hinter den Düsen (5, 6) aufweist, an die ein Hochspannungsimpuls zum Zünden anlegbar ist.

12. Flammenionisationsdetektor nach einem der Ansprüche 1 bis 12, **dadurch gekennzeichnet, dass** er mit zwei Magneten hoher Induktion zum Bilden eines magnetohydrodynamischen Generators versehen ist.

## Claims

1. Flame ionization detector comprising
a supply and an ignition device (7) for the combustible gas,
a supply for the sample gas,
a combustion chamber (4) in which the sample gas is ionized by the flame, and electrodes (8, 1) to which a voltage is applied in order to generate and measure the ion current,
the flame ionization detector being constructed as an integrated planar system of at least three parallel platelet-like substrates (1, 2, 3) which are connected to one another and are processed by microsystem technology methods,
**characterized in that** a central substrate (1) comprises nozzles (5, 6) for the gases and the ignition device (7) and a recess which forms a part of the combustion chamber (4), is completed by recesses in the neighboring substrates (2, 3) and is essentially closed together with the nozzle region by these substrates (2, 3), and the neighboring substrates (2, 3) comprise supply channels (10, 11) for the gases.

2. Flame ionization detector according to Claim 1, **characterized in that** the central substrate (1) is electrically conductive and the neighboring substrates (2, 3) are essentially nonconductive.

3. Flame ionization detector according to Claim 1 or 2, **characterized in that** the central substrate (1) consists of silicon and the neighboring substrates (2, 3) consist of glass, in particular borosilicate glass.

4. Flame ionization detector according to one of Claims 1 to 3, **characterized in that** an electrode (8) is arranged in each of the neighboring substrates (2, 3) in the region of the combustion chamber (4).

5. Flame ionization detector according to one of Claims 2 and 3, **characterized in that** one electrode is formed by the central substrate (1).

6. Flame ionization detector according to Claim 5, **characterized in that** it comprises a shielding electrode (12).

7. Flame ionization detector according to one of Claims 1 to 6, **characterized in that** all the substrates (1, 2, 3) comprise parts with rounded contours.

8. Flame ionization detector according to one of Claims 1 to 7, **characterized in that** the substrates (1, 2, 3) are connected by anodic bonding.

9. Flame ionization detector according to one of Claims 4 to 8, **characterized in that** the electrodes (8) on the neighboring substrates (1, 2) are rendered reflective.

10. Flame ionization detector according to one of Claims 1 to 9, **characterized in that** the nozzles (5, 6) for the gases are formed as a buried structure and are covered by at least one further substrate.

11. Flame ionization detector according to one of Claims 1 to 10, **characterized in that** the central substrate (1) comprises at least one electrode tip (7) immediately behind the nozzles (5, 6), to which a high-voltage pulse can be applied for ignition.

12. Flame ionization detector according to one of Claims 1 to 11, **characterized in that** it is provided with two high-induction magnets in order to form a magnetohydrodynamic generator.

## Revendications

1. Détecteur à ionisation de flamme comprenant :
une amenée et un dispositif d'allumage (7) de gaz combustible,
une amenée de gaz d'échantillon,
une chambre de combustion (4) dans laquelle le gaz d'échantillon est ionisé par la flamme et
des électrodes (8, 1) sur lesquelles une tension est appliquée pour mesurer le courant ionique,
le détecteur à ionisation de flamme étant constitué en tant que système plan intégré constitué d'au moins deux substrats (1, 2, 3) en forme de plaquette reliés parallèlement les uns aux autres et traités par des procédés de la technique des microsystèmes,
**caractérisé en ce que**
un substrat central (1) présente des tuyères (5, 6) pour les gaz, le dispositif d'allumage (7) et une découpe qui forme une partie de la chambre de combustion (4), qui est complétée par des découpes ménagées dans les substrats (2, 3) voisins et qui est fermée par ces substrats (2, 3) essentiellement en même temps que la partie formant les tuyères, les substrats voisins (2, 3) présentant des canaux (10, 11) d'amenée des gaz.

2. Détecteur à ionisation de flamme selon la revendication 1, **caractérisé en ce que** le substrat central (1) est électriquement conducteur et **en ce que** les substrats voisins (2, 3) sont essentiellement non conducteurs.

3. Détecteur à ionisation de flamme selon les revendications 1 ou 2, **caractérisé en ce que** le substrat central (1) est constitué de silicium et les substrats voisins (2, 3) de verre et en particulier de verre au borosilicate.

4. Détecteur à ionisation de flamme selon l'une des revendications 1 à 3, **caractérisé en ce qu'**une électrode (8) est disposée dans les substrats voisins (2, 3) au niveau de la chambre de combustion (4).

5. Détecteur à ionisation de flamme selon l'une des revendications 2 et 3, **caractérisé en ce qu'**une électrode est formée par le substrat central (1).

6. Détecteur à ionisation de flamme selon la revendication 5, **caractérisé en ce qu'**il présente une électrode de protection (12).

7. Détecteur à ionisation de flamme selon l'une des revendications 1 à 6, **caractérisé en ce que** tous les substrats (1, 2, 3) ont un contour arrondi.

8. Détecteur à ionisation de flamme selon l'une des revendications 1 à 7, **caractérisé en ce que** les substrats (1, 2, 3) sont reliés par liaison anodique.

9. Détecteur à ionisation de flamme selon l'une des revendications 4 à 8, **caractérisé en ce que** les électrodes (8) prévues sur les substrats (1, 2) voisins présentent un poli miroir.

10. Détecteur à ionisation de flamme selon l'une des revendications 1 à 9, **caractérisé en ce que** les tuyères (5, 6) pour les gaz sont configurées en structure gravée et sont recouvertes par au moins un autre substrat.

11. Détecteur à ionisation de flamme selon l'une des revendications 1 à 10, **caractérisé en ce que** le substrat central (1) présente au moins une pointe d'électrode (7) immédiatement en arrière des tuyères (5, 6) et sur laquelle une impulsion à haute tension peut être appliquée en vue de l'allumage.

12. Détecteur à ionisation de flamme selon l'une des revendications 1 à 11, **caractérisé en ce qu'**i est doté de deux aimants à haute induction qui forment un générateur magnétohydrodynamique.
